# EUROPEAN PATENT APPLICATION

(11) **EP 4 176 716 A1**
(43) Date of publication of application: **10.05.2023**
(21) Application number: 21206213.7
(22) Date of filing: 03.11.2021
(51) Int. Cl.: A01M 1/02, A01M 1/08, A01M 29/10

(54) **MULTIFUNCTIONAL MACHINE FOR REPELLING AND CATCHING INSECTS**

(71) Applicant: Luo, Jieping, Shenzhen, Guangdong (CN)
(72) Inventor: Luo, Jieping, Shenzhen, Guangdong (CN)
(74) Representative: Viering, Jentschura & Partner mbB Patent- und Rechtsanwälte

(57) **Abstract**

Disclosed is a multifunctional machine for repelling and catching insects, comprising: a trapping device configured to catch insects, and a repelling device arranged on an upper side of the trapping device, wherein the upper end of the trapping device is provided with a first connecting part, a lower end of the repelling device is provided with a second connecting part, and the trapping device and the repelling device are detachably assembled respectively through the first connecting part and the second connecting part. With the above structure, the present disclosure has both the functions of repelling and trapping, and is convenient to use. In addition, the trapping device and the repelling device can be separated, and the two are easy to disassemble and assemble. When transporting, they can be disassembled and packed to reduce the packing volume, thus contributing to saving transportation space and reducing transportation costs.

## Description

### FIELD OF THE DISCLOSURE

The present disclosure relates to the technical field of devices for catching and repelling insects, in particular to a multifunctional machine for repelling and catching flies, bees and other insects.

### BACKGROUND OF THE DISCLOSURE

At present, in order to prevent bees and flies from entering and affecting normal life and work, some places need to set up repellent devices, such as common devices with blades, which rotate quickly after power on to repel out flying insects such as bees that enter the site; or trapping devices such as common sticky flyboards are arranged and baits are set up on such devices to catch flies, mosquitoes and other insects. That is to say, at present, both the repelling and trapping devices have only a single function and cannot handle the harassment of different kinds of insects at the same time. For different kinds of insects, it is necessary to place two devices together, which is extremely inconvenient to use.

### SUMMARY OF THE DISCLOSURE

In order to overcome the shortcomings of the prior art, the purpose of the present disclosure is to provide a multifunctional machine for repelling and catching insects.

In order to achieve the aforementioned purpose, the technical solution of the present disclosure is to provide a multifunctional machine for repelling and catching insects, comprising: a trapping device configured to catch insects, and a repelling device arranged on an upper side of the trapping device, wherein the upper end of the trapping device is provided with a first connecting part, a lower end of the repelling device is provided with a second connecting part, and the trapping device and the repelling device are detachably assembled respectively through the first connecting part and the second connecting part.

In a preferred embodiment, the first connecting part is a receiving part, the second connecting part is an insertion part, the insertion part is configured to be inserted into the receiving part, and the insertion part and the receiving part are in interference fit.

In a preferred embodiment, the receiving part is a square frame, the insertion part is in a shape of a square column and is adapted to a shape of the receiving part, and a side edge of an insertion end of the insertion part is provided with an introduction slope.

In a preferred embodiment, a lower end of the insertion part is hinged with a handle, and the lower end of the insertion part is provided with a handle cavity for receiving the handle.

In a preferred embodiment, the repelling device comprises: a repelling device housing, a circuit board and a motor arranged in the repelling device housing, a rotating shaft arranged at an upper end of the repelling device housing and connected to an output end of the motor, and a blade connected to the output end of the motor, wherein the output end of the motor protrudes from the upper end of the repelling device housing.

In a preferred embodiment, the upper end of the repelling device housing is provided with an inwardly concave motor cavity, the upper end of the repelling device housing is provided with an upper cover plate for covering the motor cavity, and the upper cover plate is provided with an opening through which the output end of the motor extends.

In a preferred embodiment, the blade is arc-shaped, one end of which is connected to the output end of the motor, another one end of which is a free end facing downward, and the blade is a flexible blade.

In a preferred embodiment, the trapping device comprises: a trapping device housing, and a lower cover plate detachably assembled on a lower end of the trapping device housing, wherein the trapping device housing and the lower cover plate form a cavity, and a side wall of the trapping device housing is provided with ventilation holes and through holes for insects to enter the cavity.

In a preferred embodiment, a shape of the repelling device housing and a shape of the trapping device housing are adapted to each other, both present a table shape with a cross-sectional area reduced from bottom to top, and an area of a lower surface of the repelling device housing is less than or equal to an area of an upper surface of the trapping device housing.

Beneficial technical effects of the present disclosure are as follows. When using the multifunctional machine of the present disclosure, the trapping device and the repelling device are combined together, and the trapping device is equipped with devices such as bait and sticky board. Once the flies and other insects enter the trapping device, they can be caught. In addition, the arc-shaped blade on the repelling device will be activated after being energized, and the insects that cannot be caught by the trapping device will be eliminated. With the above structure, the present disclosure has both the functions of repelling and trapping, and is convenient to use. Besides, the trapping device and the repelling device can be separated, and the two are easy to disassemble and assemble. When transporting, they can be disassembled and packed to reduce the packing volume, thus contributing to saving transportation space and reducing transportation costs.

### BRIEF DESCRIPTION OF THE DRAWINGS

FIG. 1 is a schematic diagram of the structure of the present disclosure.
FIG. 2 is a schematic view of the structure of the present disclosure from another perspective
FIG. 3 is a schematic diagram of the separation of the trapping device and the repelling device.
FIG. 4 is a schematic diagram of another perspective of the separation of the trapping device and the repelling device.
FIG. 5 is an enlarged view of A in FIG. 4.
FIG. 6 is an exploded view of the structure of the repelling device.
FIG. 7 is a schematic diagram of the structure in which the repelling device can be housed in the trapping device.
Reference numeral: 1. trapping device; 2. repelling device; 101. receiving part; 102. side wall; 102a. ventilation hole; 102b. through hole; 103. trapping device house; 104. lower cover; 201. insertion part; 201a. introduction slope; 202. repelling device house; 203. rotating shaft; 204. blade; 205. handle; 205a. handle cavity; 206. motor; 206a. motor cavity; 207. upper cover.

### DETAILED DESCRIPTION OF THE EXEMPLARY EMBODIMENTS

In order to enable those skilled in the art to better understand the solution of the present disclosure, the present disclosure will be further described in detail below with reference to the accompanying drawings and embodiments.

This specific embodiment is only an explanation of the present disclosure, and it is not a limitation of the present disclosure. After reading this specification, those skilled in the art can make modifications to this embodiment that do not create any contribution as needed, but as long as the present disclosure is used, the scope of the of claims of present disclosure is protected by the patent law.

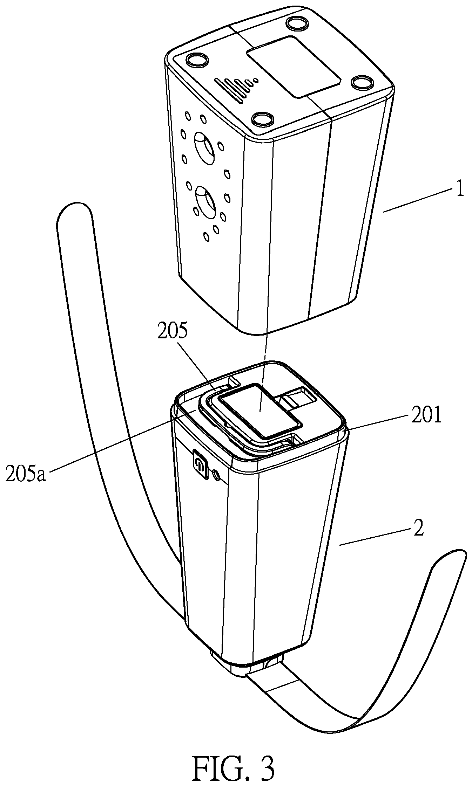

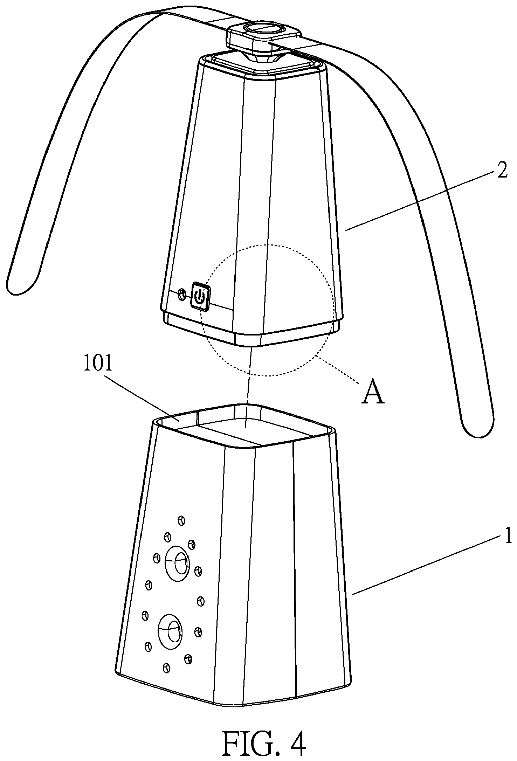

The present embodiment relates to a multifunctional machine for repelling and catching insects, as shown in FIGS. 3 and 4, comprising: a trapping device 1 for catching insects, and a repelling device 2 arranged on an upper side of the trapping device 1. The upper end of the trapping device 1 is provided with a first connecting part, a lower end of the repelling device 2 is provided with a second connecting part, and the trapping device 1 and the repelling device 2 are detachably assembled respectively through the first connecting part and the second connecting part.

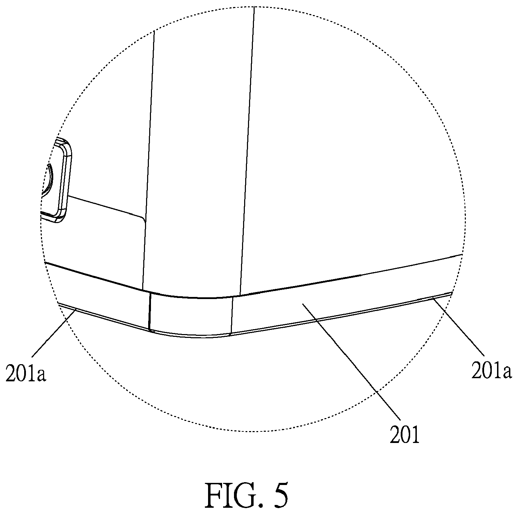

The first connecting part is a receiving part 101, the second connecting part is an insertion part 201, the insertion part 201 is configured to be inserted into the receiving part 101, and the insertion part 201 and the receiving part 101 are in interference fit. Specifically, as shown in FIGS. 3 to 5, in this embodiment, the receiving part 101 is a square frame, and the insertion part 201 is in the shape of a square column and is adapted to the shape of the receiving part 101. The side edge of the insertion end of the insertion part 201 is provided with an introduction slope 201a. When assembling, the trapping device 1 is placed on the ground as a base. In order to make the trapping device 1 and the repelling device 2 tightly connected after installation, the shape of the insertion part 201 is adapted to the shape of the receiving part 101, and the two have an interference fit. The size of the insertion part 201 is slightly larger than the corresponding size of the receiving part 101. In order to insert the insertion part 201 into the receiving part 101 to embody the assembly of the trapping device 1 and the repelling device 2, the side edge of the inserting end of the insertion part 201 is provided with an introduction slope 201a. Generally, based on product cost and lightweight design considerations, the housings of the trapping device 1 and the repelling device 2 are made of plastic. Therefore, after the insertion part 201 and the receiving part 101 are combined and both deform, an interference fit between the two can be achieved. When there is no external force, the two are tightly connected and will not be separated.

In other embodiments, the first connecting part and the second connecting part can also have other structures, such as one set in an internal thread structure and the other set in an external thread structure. That is, the trapping device 1 and the repelling device 2 can be screwed together, and they are also detachable.

As shown in FIG. 3, a lower end of the insertion part 201 is hinged with a handle 205, and the lower end of the insertion part 201 is provided with a handle cavity 205 a for receiving the handle 205. When the repelling device 2 does not need to be carried, the handle 205 can be stored in the handle cavity 205a, and when the driving device 2 needs to be carried, the handle 205 can be pulled out to facilitate the carrying.

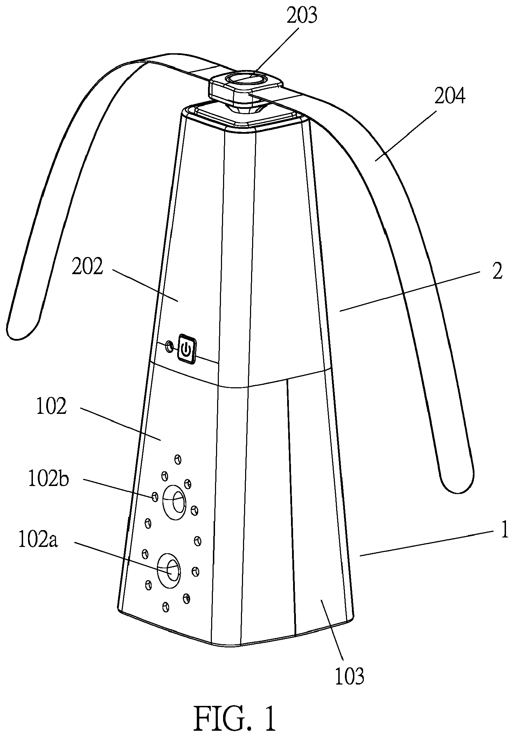

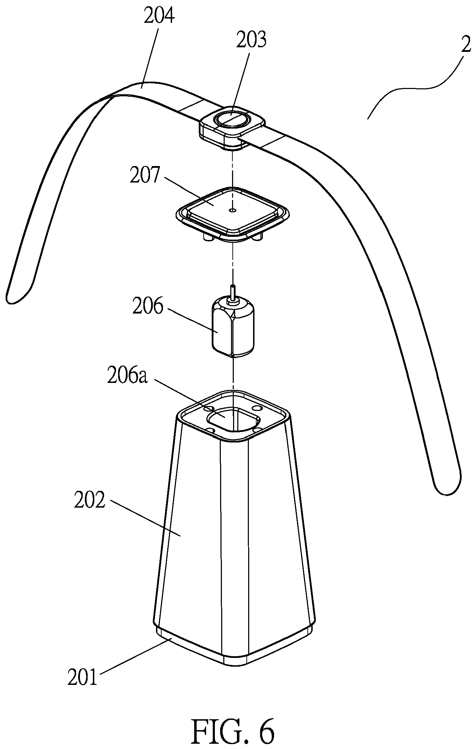

As shown in FIGS. 1 and 6, the repelling device 2 includes: a repelling device housing 202, a circuit board (not shown) and a motor 206 arranged in the repelling device housing 202, a rotating shaft 203 arranged at the upper end of the repelling device housing 202 and connected to an output end of the motor 203, and a blade 204 connected to the output end of the motor, wherein the output end of the motor 206 protrudes from the upper end of the repelling device housing 202. A battery (not shown) is provided in the repelling device housing 202, and a charging port (not shown) is opened on the repelling device housing 202.

As shown in FIG. 6, the upper end of the repelling device housing 202 is provided with an inwardly concave motor cavity 206a, the upper end of the repelling device housing 202 is provided with an upper cover plate 207 for covering the motor cavity 206a, and the upper cover plate 207 is provided with an opening through which the output end of the motor 206 extends. By providing the motor cavity 206a and the upper cover plate 207, the installation, maintenance and replacement of the motor 206 are facilitated.

As shown in FIGS. 1 to 4, as a preferred solution, the blade 204 is arc-shaped, one end of which is connected to the output end of the motor 206, and another one end of which is a free end and faces downward. The blade 204 is a flexible blade.

In this embodiment, the insertion part 201 is provided at the lower end of the repelling device housing 202 and the two are integrally formed.

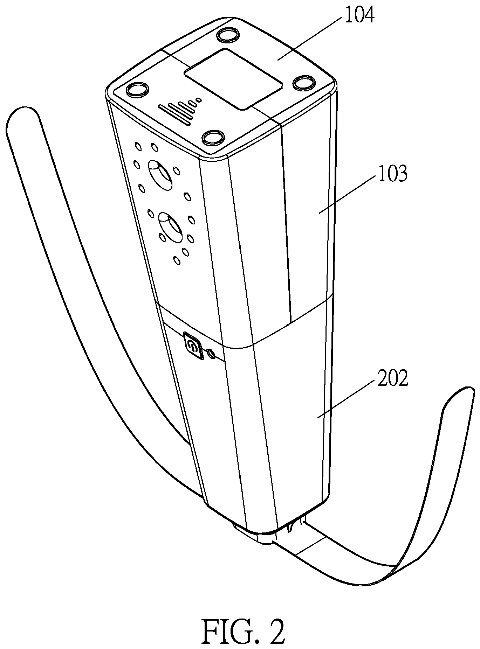

As shown in FIGS. 1 and 2, the trapping device comprises: a trapping device housing 103, and a lower cover plate 104 detachably assembled on a lower end of the trapping device housing 103, wherein the trapping device housing 103 and the lower cover plate 104 form a cavity which is used to place bait and trap insects, and a side wall of the trapping device housing 103 is provided with ventilation holes and through holes for insects to enter the cavity. The number of the ventilation holes 102a and the through holes 102b is not particularly limited.

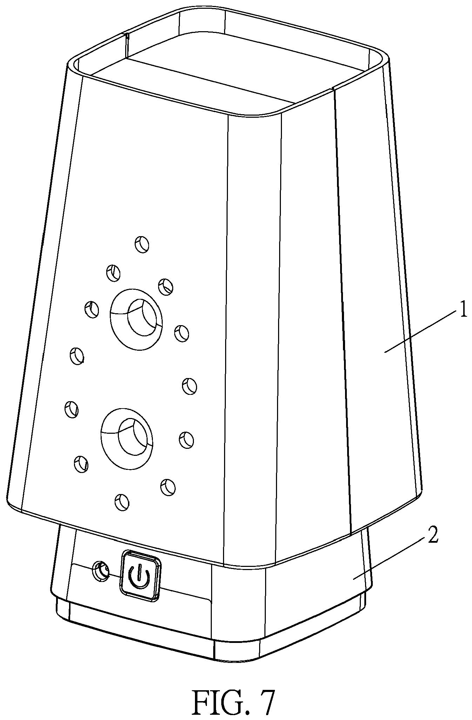

As another important improvement point, in this embodiment, the shapes of the repelling device housing 202 and the trapping device housing 103 are adapted to each other, and both present a table shape with a cross-sectional area reduced from bottom to top. The area of the lower surface of the repelling device housing 202 is less than or equal to the area of the upper surface of the trapping device housing 103. As shown in FIG. 7, such a structural design enables the repelling device 2 to be housed in the trapping device 1 after the lower cover 104 of the trapping device 1 is removed. That is, the trapping device 1 can be sleeved on the upper side of the repelling device 2, which saves more space during transportation or storage. Moreover, since the blade 204 is a flexible blade, it does not need to be disassembled, and it can be directly attached to the side of the repelling device housing 202 and stored in the trapping device 1 together.

The working principle of the present disclosure is roughly as follows. When in use, the trapping device 1 and the repelling device 2 are combined together and the trapping device 1 is equipped with devices such as bait and sticky board. After flies and other insects enter the trapping device 1, they can be caught. In addition, the blade 204 on the repelling device 2 is powered on to repel away the insects that cannot be caught by the trapping device 1. With the above structure, the present disclosure has both repelling and trapping functions and is convenient to use. Besides, the trapping device 1 and the repelling device 2 are separable, and the two are easy to disassemble and assemble. During transportation, they can be disassembled and packed to reduce the packing volume, thereby saving transportation space and reducing transportation costs.

The above are only used to illustrate the technical solution of the present disclosure and not to limit it. Other modifications or equivalent substitutions made by those of ordinary skill in the art to the technical solution of the present disclosure are all applicable as long as they do not deviate from the spirit and scope of the technical solution of the present disclosure, they shall be covered in the scope of the claims of the present disclosure.

## Claims

1. A multifunctional machine for repelling and catching insects, comprising:
a trapping device configured to catch insects; and
a repelling device arranged on an upper side of the trapping device,
wherein the upper end of the trapping device is provided with a first connecting part, a lower end of the repelling device is provided with a second connecting part, and the trapping device and the repelling device are detachably assembled respectively through the first connecting part and the second connecting part.

2. The multifunctional machine for repelling and catching insects according to claim 1, wherein the first connecting part is a receiving part, the second connecting part is an insertion part, the insertion part is configured to be inserted into the receiving part, and the insertion part and the receiving part are in interference fit.

3. The multifunctional machine for repelling and catching insects according to claim 2, wherein the receiving part is a square frame, the insertion part is in a shape of a square column and is adapted to a shape of the receiving part, and a side edge of an insertion end of the insertion part is provided with an introduction slope.

4. The multifunctional machine for repelling and catching insects according to claim 2, wherein a lower end of the insertion part is hinged with a handle, and the lower end of the insertion part is provided with a handle cavity for receiving the handle.

5. The multifunctional machine for repelling and catching insects according to claim 1, wherein the repelling device comprises:
a repelling device housing;
a circuit board and a motor arranged in the repelling device housing;
a rotating shaft arranged at an upper end of the repelling device housing and connected to an output end of the motor; and
a blade connected to the output end of the motor,
wherein the output end of the motor protrudes from the upper end of the repelling device housing.

6. The multifunctional machine for repelling and catching insects according to claim 5, wherein the upper end of the repelling device housing is provided with an inwardly concave motor cavity, the upper end of the repelling device housing is provided with an upper cover plate for covering the motor cavity, and the upper cover plate is provided with an opening through which the output end of the motor extends.

7. The multifunctional machine for repelling and catching insects according to claim 5, wherein the blade is arc-shaped, one end of which is connected to the output end of the motor, another one end of which is a free end facing downward, and the blade is a flexible blade.

8. The multifunctional machine for repelling and catching insects according to claim 5, wherein the trapping device comprises:
a trapping device housing; and
a lower cover plate detachably assembled on a lower end of the trapping device housing,
wherein the trapping device housing and the lower cover plate form a cavity, and a side wall of the trapping device housing is provided with ventilation holes and passing holes for insects to enter the cavity.

9. The multifunctional machine for repelling and catching insects according to claim 8, wherein a shape of the repelling device housing and a shape of the trapping device housing are adapted to each other, both present a table shape with a cross-sectional area reduced from bottom to top, and an area of a lower surface of the repelling device housing is less than or equal to an area of an upper surface of the trapping device housing.

## Amended claims

### Amended claims in accordance with Rule 137(2) EPC.

1. A multifunctional machine for repelling and catching insects, comprising:
a trapping device (1) configured to catch insects; and
a repelling device (2) arranged on an upper side of the trapping device,
wherein the upper end of the trapping device (1) is provided with a first connecting part, a lower end of the repelling device (2) is provided with a second connecting part, and the trapping device (1) and the repelling device (2) are detachably assembled respectively through the first connecting part and the second connecting part,
**characterized in that** the repelling device (2) comprises:
a repelling device housing (202);
a circuit board and a motor (206) arranged in the repelling device housing (202);
a rotating shaft (203) arranged at an upper end of the repelling device housing (202) and connected to an output end of the motor (206); and
a blade (204) connected to the output end of the motor (206),
wherein the output end of the motor (206) protrudes from the upper end of the repelling device housing (202), and
wherein the trapping device (1) comprises:
a trapping device housing (103); and
a lower cover plate (104) detachably assembled on a lower end of the trapping device housing (1),
wherein the trapping device housing (103) and the lower cover plate (104) form a cavity, and a side wall of the trapping device housing (103) is provided with ventilation holes (102a) and passing holes (102b) for insects to enter the cavity.

2. The multifunctional machine for repelling and catching insects according to claim 1, wherein the first connecting part is a receiving part (101), the second connecting part is an insertion part (201), the insertion part (201) is configured to be inserted into the receiving part (101), and the insertion part (201) and the receiving part (101) are in interference fit.

3. The multifunctional machine for repelling and catching insects according to claim 2, wherein the receiving part (101) is a square frame, the insertion part (201) is in a shape of a square column and is adapted to a shape of the receiving part (101), and a side edge of an insertion end of the insertion part (201) is provided with an introduction slope.

4. The multifunctional machine for repelling and catching insects according to claim 2, wherein a lower end of the insertion part (201) is hinged with a handle (205), and the lower end of the insertion part (201) is provided with a handle cavity (205a) for receiving the handle (205).

5. The multifunctional machine for repelling and catching insects according to claim 1, wherein the upper end of the repelling device housing (202) is provided with an inwardly concave motor cavity (206a), the upper end of the repelling device housing (202) is provided with an upper cover plate (207) for covering the motor cavity (206a), and the upper cover plate (207) is provided with an opening through which the output end of the motor (206) extends.

6. The multifunctional machine for repelling and catching insects according to claim 1, wherein the blade (204) is arc-shaped, one end of which is connected to the output end of the motor (206), another one end of which is a free end facing downward, and the blade (204) is a flexible blade.

7. The multifunctional machine for repelling and catching insects according to claim 1, wherein a shape of the repelling device housing (202) and a shape of the trapping device housing (103) are adapted to each other, both present a table shape with a cross-sectional area reduced from bottom to top, and an area of a lower surface of the repelling device housing (202) is less than or equal to an area of an upper surface of the trapping device housing (103).
